**Europäisches Patentamt**

**European Patent Office**

**Office européen des brevets**

(19)

(11) Veröffentlichungsnummer : **0 398 027 B1**

(12) **EUROPÄISCHE PATENTSCHRIFT**

(45) Veröffentlichungstag der Patentschrift :
**15.07.92 Patentblatt 92/29**

(51) Int. Cl.$^5$ : **B60J 7/22**

(21) Anmeldenummer : **90107312.2**

(22) Anmeldetag : **18.04.90**

(54) **Windschutz für ein Cabriolet.**

(30) Priorität : **16.05.89 DE 3915866**

(43) Veröffentlichungstag der Anmeldung :
**22.11.90 Patentblatt 90/47**

(45) Bekanntmachung des Hinweises auf die
Patenterteilung :
**15.07.92 Patentblatt 92/29**

(84) Benannte Vertragsstaaten :
**ES FR GB IT**

(56) Entgegenhaltungen :
**EP-A- 0 233 777**

(56) Entgegenhaltungen :
**EP-A- 0 340 796**
**DE-U- 8 813 139**
**FR-A- 2 535 385**
**GB-A- 2 182 010**

(73) Patentinhaber : **DAIMLER-BENZ**
**AKTIENGESELLSCHAFT**
**Mercedesstrasse 136**
**W-7000 Stuttgart 60 (DE)**

(72) Erfinder : **Götz, Hans, Dipl.-Ing.**
**Dahlienstrasse 35**
**W-7030 Böblingen 4 (DE)**
Erfinder : **Baumann, Karl-Heinz, Dipl.-Ing.**
**Brühlstrasse 3**
**W-7048 Bondorf (DE)**

EP 0 398 027 B1

## Beschreibung

Die Erfindung betrifft einen Windschutz für ein Cabriolet, der hinter einer Sitzreihe angeordnet ist, sich über diese hinaus nach oben erstreckt und über die gesamte Innenraumbreite verläuft, und der von einem eingespannten, elastisch verformbaren Netz gebildet ist, das eine Verzögerung der von hinten auftreffenden Luftströmung bewirkt.

Ein derartiger Windschutz für ein Cabriolet bildet den Gegenstand der älteren deutschen Patentanmeldung P 38 36 375.5-21.

Der vorliegenden Erfindung lag die Aufgabe zugrunde, ein bei einem derartigen Windschutz verwendetes Netz so weiterzubilden, daß eine optimale Beeinflussung der von hinten auftreffenden Luftströmung erreicht wird.

Diese Aufgabe wird bei einem gattungsgemäßen Windschutz erfindungsgemäß dadurch gelöst, daß der Anteil der lichten Durchlaßöffnungen an der Gesamtnetzfläche etwa 30 bis 35% beträgt, daß die einzelnen Durchlaßöffnungen allseitig von etwa rechtwinklig zueinander verlaufenden Stegen mit runder bis ovaler Querschnittsform begrenzt werden, und daß die Wandstärke der Stege etwa 0,15 bis 0,3 mm beträgt.

Weitere vorteilhafte Weiterbildungen des Netzes bilden den Inhalt der Patentansprüche 2 und 3.

Durch die Merkmale des Patentanspruchs 4 wird ein faltenfreies Aufspannen des Netzes wesentlich erleichtert.

Der Gegenstand der Erfindung soll im folgenden anhand von in der Zeichnung dargestellten Ausführungsbeispielen näher erläutert werden.

In der Zeichnung zeigen

Fig. 1 stark vergrößert einen etwa 10 x 10 mm großen Netzausschnitt, und

Fig. 2 schematisch ein in einem Rahmen eingespanntes Netz.

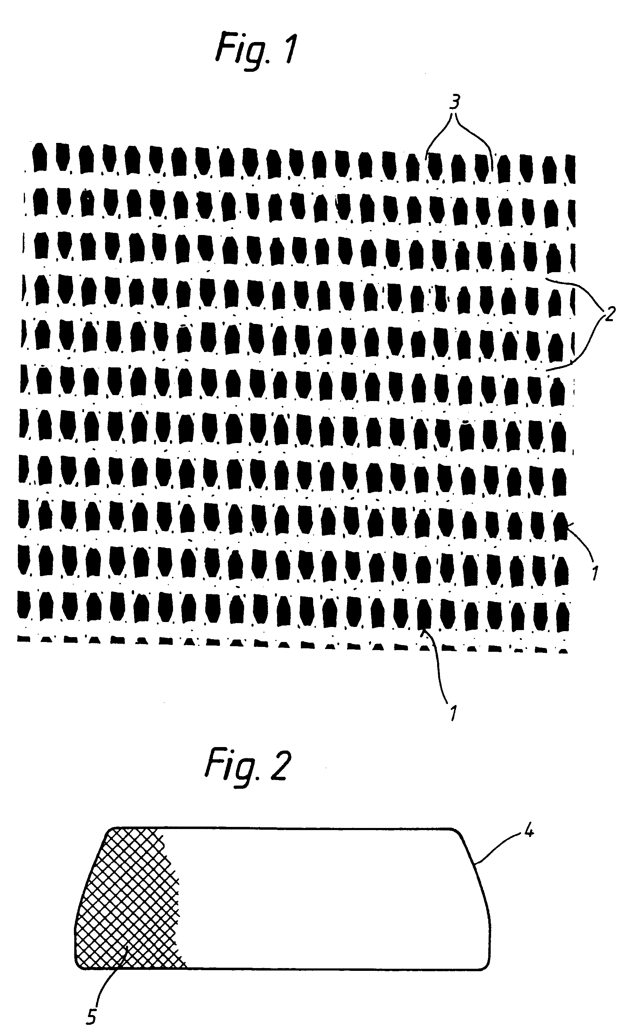

Der in Fig. 1 der Zeichnung dargestellte Netzausschnitt weist in Originalgröße eine Kantenlänge von jeweils etwa 10 mm auf.

Die in der Abbildung dunkel erscheinenden lichten Durchlaßöffnungen 1 sind allseitig begrenzt von Stegen 2 und 3, wobei die horizontalen Stege 2 eine Wandstärke von etwa 0,3 mm und die vertikalen Stege 3 eine solche von etwa 0,15 mm aufweisen.

Insgesamt weisen die lichten Durchlaßöffnungen einen Flächenanteil von 30 bis 35% und entsprechend die Stege 2, 3 einen solchen von etwa 70 bis 65% auf.

Die Stege 2, 3 sollen dabei runden bis ovalen Querschnitt aufweisen, weil scharfkantige Querschnitte, wie sie z.B. bei Streckmetallen oder Lochblechen vorliegen, störende Zischgeräusch verursachen.

Bei Belastung eines 5 cm breiten und 10 cm langen Prüfstreifens durch 10 N in Längsrichtung sollte die elastische Dehnung des Netzmaterials zwischen 4 und 40% betragen.

In Fig. 2 der Zeichnung ist ein Rahmen 4 dargestellt, in dem ein Netz 5 eingespannt ist, wobei letzteres gegenüber der Darstellung nach Fig. 1 um ca. 45° gedreht ist. Durch eine derartige Anordnung wird auf einfache Weise eine faltenfreie Verspannung des Netzes 5 ermöglicht.

## Patentansprüche

1. Windschutz für ein Cabriolet, der hinter einer Sitzreihe angeordnet ist, sich über diese hinaus nach oben erstreckt und über die gesamte Innenraumbreite verläuft, und der von einem eingespannten, elastisch verformbaren Netz gebildet ist, das eine Verzögerung der von hinten auftreffenden Luftströmung bewirkt, **dadurch gekennzeichnet,** daß der Anteil der lichten Durchlaßöffnungen (1) an der Gesamtnetzfläche etwa 30 bis 35% beträgt, daß die einzelnen Durchlaßöffnungen (1) allseitig von etwa rechtwinklig zueinander verlaufenden Stegen (2, 3) mit runder bis ovaler Querschnittsform begrenzt werden, und daß die Wandstärke der Stege (2, 3) etwa 0,15 bis 0,3 mm beträgt.

2. Windschutz nach Anspruch 1, **dadurch gekennzeichnet,** daß die Wandstärke der in einer Richtung verlaufenden Stege (3) etwa 0,15 und die der etwa rechtwinklig dazu verlaufenden Stege (2) etwa 0,3 mm beträgt.

3. Windschutz nach den Ansprüchen 1 und 2, **dadurch gekennzeichnet,** daß auf einer Fläche von 10 x 10 mm etwa 12 Stege (2) mit etwa 0,3 mm Wandstärke und etwa 20 Stege (3) mit etwa 0,15 mm Wandstärke angeordnet sind.

4. Windschutz nach einem oder mehreren der vorhergehenden Ansprüche,

2

**dadurch gekennzeichnet,**
daß das Netz (5) in einem Rahmen (4) derart eingespannt ist, daß die Stege (2, 3) um etwa 45° zur Horizontalen geneigt verlaufen.

## Claims

1. Windguard for a convertible which is arranged behind a row of seats, extends up beyond this row of seats and runs over the entire width of the interior space and which is formed by a stretched, elastically deformable net which effects a retardation of the air flow appearing from the rear,
**characterized in that**
the portion of the clear passage openings (1) at the total net area is about 30 to 35%, in that the individual passage openings (1) are defined all round by webs (2, 3) running approximately at right angles to one another and having a round to oval cross-sectional shape, and in that the wall thickness of the webs (2, 3) is about 0.15 to 0. 3 mm.

2. Windguard according to Claim 1,
**characterized in that**
the wall thickness of the webs (3) running in one direction is about 0. 15 mm and that of the webs ( 2 ) running approximately at right angles thereto is about 0.3 mm.

3. Windguard according to Claims 1 and 2,
**characterized in that**
about 12 webs (2) having a wall thickness of about 0. 3 mm and about 20 webs (3) having a wall thickness of about 0. 15 mm are arranged on an area of 10 x 10 mm.

4. Windguard according to one or more of the preceding Claims,
**characterized in that**
the net (5) is stretched in a frame (4) in such a way that the webs (2, 3) run at a slope of about 45° to the horizontal.

## Revendications

1. Pare-vent pour un cabriolet, qui est disposé derrière une rangée de sièges, se développe vers le haut au-delà de cette dernière et s'étend sur toute la largeur de l'habitacle, et qui est constitué d'un filet tendu, élastiquement déformable, qui produit une décélération du flux d'air arrivant par l'arrière,
**caractérisé en ce que**
les ouvertures de libre passage (1) occupent environ 30 à 35% de la surface totale du filet, en ce que les ouvertures de passage individuelles (1) sont délimitées de tous côtés par des nervures (2, 3) de section ronde à ovale qui s'étendent approximativement perpendiculairement entre elles, et en ce que l'épaisseur de paroi des nervures (2, 3) est égale à environ 0,15 à 0,3 mm.

2. Pare-vent selon la revendication 1,
**caractérisé en ce que**
l'épaisseur de paroi des nervures (3) qui s'étendent dans une direction est égale à environ 0,15 mm et celle des nervures (2) qui s'étendent approximativement perpendiculairement aux précédentes à environ 0,3 mm.

3. Pare-vent selon la revendication 1 ou 2,
**caractérisé en ce qu'**
environ 12 nervures (2) d'environ 0,3 mm d'épaisseur de paroi et environ 20 nervures (3) d'environ 0,15 mm d'épaisseur de paroi sont disposées sur une surface de 10 x 10 mm.

4. Pare-vent selon l'une ou plusieurs des revendications précédentes,
**caractérisé en ce que**
le filet (5) est tendu dans un cadre (4) de telle sorte que les nervures (2, 3) s'étendent avec une inclinaison d'environ 45 ° par rapport à l'horizontale.

# Fig. 1

# Fig. 2